# EUROPÄISCHE PATENTSCHRIFT

(11) **EP 3 611 711 B1**
(45) Veröffentlichungstag und Bekanntmachung des Hinweises auf die Patenterteilung: **19.06.2024**
(21) Anmeldenummer: 19176146.9
(22) Anmeldetag: 23.05.2019
(51) Int. Cl.: G08G 1/14, G08G 1/01, G06N 3/08, G06V 10/10, G06V 10/764, G06V 10/82, G06V 20/58

(54) **VERFAHREN ZUM KLASSIFIZIEREN VON DATEN BETREFFEND EINE PARKLÜCKE FÜR EIN KRAFTFAHRZEUG**
METHOD FOR CLASSIFYING DATA RELATING TO A PARKING SPACE FOR A MOTOR VEHICLE
PROCÉDÉ DE CLASSIFICATION DE DONNÉES CONCERNANT UN ESPACE DE STATIONNEMENT POUR UN VÉHICULE AUTOMOBILE

(30) Priorität: 16.08.2018 DE 102018119897
(43) Veröffentlichungstag der Anmeldung: 19.02.2020
(73) Patentinhaber: Valeo Schalter und Sensoren GmbH, 74321 Bietigheim-Bissingen (DE)
(72) Erfinder: SHALABY, Mahmoud, 74321 Bietigheim-Bissingen (DE); OMAR, Ahmed, 74321 Bietigheim-Bissingen (DE); HEIMBERGER, Markus, 74321 Bietigheim-Bissingen (DE)
(74) Vertreter: Pothmann, Karsten

(56) Entgegenhaltungen:
- EP-A1- 3 349 201
- DE-A1-102014 209 453
- DE-U1-202015 104 709
- US-A1- 2017 294 121

## Beschreibung

Die vorliegende Erfindung betrifft ein Verfahren zum Klassifizieren von Daten betreffend eine Parklücke für ein Kraftfahrzeug mittels eines mobilen Handgeräts. Diese Erfindung beschreibt ebenfalls ein Parkassistenzsystem eines Kraftfahrzeugs zum Klassifizieren von Daten betreffend eine Parklücke.

Heutzutage sind viele Kraftfahrzeuge mit Parkassistenzsystemen ausgestattet. Diese Parkassistenzsysteme verwenden meistens Ultraschallsignale, welche von Ultraschallsensoren gewonnen werden. Dabei kommt es häufig vor, dass die Ultraschallsignale fälschlicherweise einen freien Raum als Parkplatz anzeigen. Dies kann beispielsweise daran liegen, dass mittels der Ultraschallsignale zwar eine Parklücke als freier Raum erkannt werden kann, jedoch daraus nicht zwangsläufig folgt, dass es sich dabei um einen Parkplatz für das Kraftfahrzeug handelt. In vielen Fällen kann diese zusätzliche Information einem Parkassistenzsystem durch eine externe Recheneinheit übermittelt werden. Doch gerade bei Parkvorgängen innerhalb von Gebäuden kann es häufig vorkommen, dass zwischen dem Parkassistenzsystem des Kraftfahrzeugs und der externen Recheneinheit keine Datenverbindung möglich ist. Zudem verfügen viele externe Recheneinheiten nicht zwangsläufig über die notwendigen Hardwarekapazitäten, um für alle Kraftfahrzeuge aufbereitete Daten für mögliche Parkplätze zur Verfügung stellen zu können.

Die Offenlegungsschrift DE 10 2013 100 953 A1 beschreibt ein Verfahren und ein System zum Auffinden freier Parkplatzpositionen in einem Großraum. Daten zu Belegungszuständen von Flächen innerhalb eines Großraums, insbesondere Informationen über unbelegte Parkplätze, werden bereitgestellt und können abgerufen werden. Dabei erfolgt die Erfassung der Daten zu den Belegungszuständen von Flächen mittels in einem Großraum angeordneten Sensoren und/oder mittels Sensoren, die an sich aufhaltenden Fahrzeugen im Großraum angeordnet sind. Diese Informationen können mit Informationen, welche mittels einer Positionsbestimmungseinrichtung gewonnen werden können, verknüpft werden. Diese verknüpften Daten können an die dem Großraum zugeordnete Parkleitzentrale übertragen werden. Die Offenlegungsschrift offenbart ferner eine Verarbeitungseinrichtung der Parkleitzentrale, welche dazu ausgebildet ist, mittels der erhobenen beziehungsweise übermittelten Daten eine Wahrscheinlichkeit oder die mittlere Frei-Zeit dieser Parkplatzpositionen zu ermitteln.

Die Offenlegungsschrift DE 10 2012 216 994 A1 beschreibt ein Verfahren zur Parkplatzvermittlung und ein freier-Parkplatz-Assistenzsystem. Dabei ermitteln Verkehrsteilnehmer Informationen über freie Parkplätze und diese Informationen werden an ein Cloud-Computing-System übermittelt. Dabei können insbesondere Meta-Informationen über freie und belegte Parkplätze ermittelt werden und diese Informationen dem Cloud-Computing-System übermittelt werden.

DE 20 2015 104709 U1 offenbart eine mobile Kommunikationseinrichtung, insbesondere Mobilfunktelefon, mit einem Anzeigemittel, mit Eingabemitteln, einer Fahrzeugkonnektierungs-Schnittstelle für eine Verbindung zu einem Fahrzeug und einer Infrastruktur-Schnittstelle für eine Verbindung zu einem Bauwerk, insbesondere Parkhaus, wobei das Fahrzeug und das Bauwerk Sensoren und/oder Aktuatoren und/oder Daten aufweisen, welche über die Fahrzeugkonnektierungs-Schnittstelle und/oder die Infrastruktur-Schnittstelle abfragbar sind. Die mobile Kommunikationseinrichtung ist derart eingerichtet, dass bei einer Kommunikationsverbindung mit dem Bauwerk - insbesondere ein Lageplan des Bauwerks, insbesondere über die Infrastruktur-Schnittstelle, an die mobile Kommunikationseinrichtung übermittelt wird, - Fahrzeugdaten, insbesondere Höhe, Länge und/oder Breite des Fahrzeugs über die Fahrzeugkonnektierungs-Schnittstelle an die mobile Kommunikationseinrichtung übermittelt werden, - eine Auswahl oder Zuweisung eines Parkplatzes für das Fahrzeug über die Infrastruktur-Schnittstelle an die mobile Kommunikationseinrichtung übermittelt wird, - Navigationsinformationen bereitgestellt und/oder Positionsinformationen bestimmt werden, welche mittels der Sensoren des Bauwerks ermittelt werden.

EP 3 349 201 A1 offenbart ein Fahrzeug-Einparkhilfesystem umfassend eine omnidirektionale Fahrzeugkamera mit einem Sichtfeld von etwa 360 Grad zumindest in der horizontalen Ebene, die an einem Dach des Fahrzeugs angebracht ist, wobei die omnidirektionale Fahrzeugkamera so konfiguriert und angeordnet ist, dass sie mindestens ein Bild einer Umgebung in der Nähe des Fahrzeugs aufnimmt, eine Recheneinheit, die mit der omnidirektionalen Fahrzeugkamera zum Empfangen von Daten des mindestens einen Bildes gekoppelt ist, wobei die Recheneinheit konfiguriert ist, um aus den Daten des mindestens einen Bildes für das Fahrzeug mindestens einen Parametersatz zu bestimmen, der auf mindestens eine Eigenschaft eines Kandidatenparkplatzes für das Fahrzeug hinweist, eine Vielzahl von Fahrzeugen, die sich in der Umgebung befinden, und eine Verarbeitungseinheit, die mit der Recheneinheit wirksam gekoppelt und konfiguriert ist, um mindestens einen Kandidatenparkplatz aus dem Parametersatz zu ermitteln. Die Verarbeitungseinheit ist so konfiguriert, dass sie eine Datendarstellung zumindest eines Teils der Umgebung mit einer Darstellung des ermittelten mindestens einen Kandidatenparkplatzes für eine grafische Benutzerschnittstelle für eine Fahrerassistenz bereitstellt.

US 2017/294121 A1 offenbart Verfahren, Systeme und Computerprogrammprodukte zum Erfassen verfügbarer Parkplätze in einer Parkumgebung. Radarsysteme werden verwendet, um Daten über die Umgebung eines Parkplatzes zu sammeln. Die Radardaten werden einem neuronalen Netzmodell als Input zur Verfügung gestellt. Algorithmen, die neuronale Netze verwenden, können darauf trainiert werden, geparkte Fahrzeuge und widersprüchliche Daten bezüglich Trümmern, Einkaufswagen, Straßenlaternen, Verkehrsschildern, Fußgängern usw. zu erkennen. Das neuronale Netzmodell verarbeitet die Radardaten, um Parkraumgrenzen abzuschätzen und die Parkraumgrenzen als Splines anzunähern. Das neuronale Netzmodell gibt Spline-Schätzungen an ein Fahrzeugcomputersystem aus. Das Computersystem des Fahrzeugs nutzt die Spline-Schätzungen, um freie Parkplätze zu erkennen. Die Spline-Schätzungen werden aktualisiert, wenn das Fahrzeug durch die Parkumgebung navigiert.

Die Aufgabe der vorliegenden Erfindung besteht darin, ein verbessertes Verfahren zum Klassifizieren von Daten betreffend eine Parklücke und entsprechendes Parkassistenzsystem bereitzustellen.

Diese Aufgabe wird durch die unabhängigen Ansprüche dieser Erfindung gelöst. Vorteilhafte Weiterbildungen sind in den Unteransprüchen und in den Beispielen gegeben.

Diese Erfindung sieht ein Verfahren zum Klassifizieren von Daten betreffend eine Parklücke für ein Kraftfahrzeug mittels eines mobilen Handgeräts vor. Durch das Klassifizieren werden Informationen über die Parklücke in Form von Metadaten ermittelt und einem Fahrer des Kraftfahrzeugs zur Verfügung gestellt.

Eine Parklücke kann insbesondere ein freier Raum auf der Erdoberfläche sein, auf dem ein Kraftfahrzeug abgestellt werden kann. Demzufolge bedeutet der Begriff Parklücke nicht zwingend, dass anhand anderer Objekte eine Lücke gegeben sein muss. In vielen Fällen ist jedoch eine Parklücke anhand mehrerer Kraftfahrzeuge gegeben. Beispielsweise können zwei Kraftfahrzeuge auf einem Parkareal so angeordnet sein, dass zwischen diesen beiden Kraftfahrzeugen eine Parklücke gegeben ist. Diese beiden Kraftfahrzeuge können jedoch auch an der Seite einer Straße so geparkt sein, dass entlang einer Längsausdehnung dieser Kraftfahrzeuge zwischen diesen beiden Kraftfahrzeugen eine Parklücke gegeben ist. In diesem Fall könnte ein weiteres Kraftfahrzeug seitlich eingeparkt werden. Somit können Parklücken ein paralleles oder ein senkrechtes Einparken ermöglichen. Die Parklücken können demnach senkrecht, parallel oder schräg zu einer sich daran anschließenden Fahrbahn angeordnet sein. In einem Parkhaus beispielsweise können die Parklücken schräg zu der Fahrbahn angeordnet sein.

Häufig sind Parklücken durch entsprechende Markierungen gekennzeichnet. Jedoch bedarf es grundsätzlich keiner Markierung oder anderer Objekte, damit eine Parklücke gegeben ist. Somit kann grundsätzlich jeder Ort als Parklücke gelten, welcher aufgrund seiner Abmessungen grundsätzlich ein Abstellen des jeweiligen Kraftfahrzeugs erlauben würde. Somit kann prinzipiell auch ein Feldweg oder eine Wiese theoretisch als Parklücke aufgefasst werden. Im Rahmen dieser Anmeldung wird selbstverständlich davon ausgegangen, dass die Parklücke stets auf einer Oberfläche angeordnet ist. Die Parklücke muss für das Kraftfahrzeug theoretisch durch Manövrieren des Kraftfahrzeugs erreichbar sein. Die jeweilige Oberfläche ist in aller Regel als Fahrbahn ausgebildet, kann jedoch in speziellen Fällen auch anders ausgestaltet sein (zum Beispiel eine Ebene eines Parklifts).

In einem Schritt a) werden Daten, welche einen potentiellen Parkplatz für das Kraftfahrzeug darstellen, zu dem mobilen Handgerät übermittelt. Das mobile Handgerät ruft die Daten von einem Rechenmodul des Kraftfahrzeugs ab.

Häufig erhält das mobile Handgerät Daten zu potentiellen Parkplätzen von einer Parkleitzentrale eines Parkhauses. Das mobile Handgerät kann jedoch diese Daten von einem anderen verschiedenen mobilen Handgerät erhalten. Diese Daten können von einem Rechenmodul der Parkleitzentrale oder dem anderen verschiedenen mobilen Handgerät dem mobilen Handgerät übermittelt werden beziehungsweise das mobile Handgerät kann diese Daten von den anderen Geräten abrufen.

In einem Schritt b) werden die übermittelten Daten betreffend die Parklücke durch das mobile Handgerät klassifiziert. Dies bedeutet, dass das Klassifizieren der übermittelten Daten nicht durch eine externe Recheneinheit oder ein Rechenmodul des Kraftfahrzeugs erfolgt, sondern durch das mobile Handgerät. Dabei weist das mobile Handgerät ein neuronales Netz auf und das mobile Handgerät setzt das neuronale Netz zum Klassifizieren der übermittelten Daten ein. Das mobile Handgerät übermittelt nach dem Klassifizieren ein Ergebnis betreffend die Parklücke an das Rechenmodul des Kraftfahrzeugs.

Das neuronale Netz weist insbesondere Deep Learning-Algorithmen auf. Damit wird beabsichtigt, menschliche Denkstrukturen mittels des neuronalen Netzes nachzubilden. Dazu wird das neuronale Netz vorzugsweise im Vorfeld trainiert. Dies bedeutet, dass das neuronale Netz vorab mit Trainingsdaten trainiert wurde. Als Trainingsdaten können verschiedene Datensätze, verschiedene Merkmale aus unterschiedlichen Situationen oder verschiedene Bilder infrage kommen.

Häufig werden Bilder, Texte sowie eine Spracherkennung und verschiedene Sensordaten (beispielsweise Ultraschalldaten) als Trainingsdaten verwendet. Das Trainieren des neuronalen Netzes beansprucht in der Regel sehr viele digitale Ressourcen, sodass das Trainieren des neuronalen Netzes idealerweise vorab durch einen Hochleistungscomputer durchgeführt wird. Ist das neuronale Netz bereits trainiert, so kann es problemlos auf dem mobilen Handgerät installiert werden und dort zum Einsatz kommen. Damit kann das mobile Handgerät die Daten betreffend die Parklücke näher spezifizieren und somit klassifizieren. Unter dem Begriff Klassifizieren versteht man das Erzeugen und Bereitstellen von Metadaten. In der Regel beschreiben die Daten betreffend die Parklücke Positionsdaten eines möglichen Parkplatzes. Im Rahmen der Klassifizierung durch das neuronale Netz des mobilen Handgeräts werden weitere für einen Fahrer des Kraftfahrzeugs interessante Informationen gewonnen und bereitgestellt. Zu diesen Informationen zählen beispielsweise anfallende Parkgebühren, Parkstatistiken, Einbruchstatistiken von Kraftfahrzeugen, welche an diesem Parkplatz abgestellt wurden, Parkberechtigungen, Art des Parkplatzes (Behindertenparkplatz, Anwohnerparkplatz, Familien- oder Frauenparkplatz), zu erwartende Geldstrafe bei einem nicht erlaubten Parkvorgang etc. All diese Informationen werden in Form von Metadaten durch das mobile Handgerät, welches ein neuronales Netz einsetzt, ermittelt und einem Fahrer zur Verfügung gestellt

Es ist vorzugsweise vorgesehen, dass derartige Metadaten von dem mobilen Handgerät an ein Rechenmodul einer Parkleitzentrale übermittelt wird. Sollte dies aufgrund einer fehlenden Datenverbindung, welche häufig innerhalb von Parkhäusern nicht gegeben ist, zeitweise nicht möglich sein, so ist insbesondere vorgesehen, dass diese Metadaten temporär zwischengespeichert werden und dann übermittelt werden, sobald eine Datenverbindung verfügbar ist. Durch den Einsatz des mobilen Handgeräts kann die Klassifizierung der Daten betreffend die Parklücke jeweils durch das entsprechende mobile Handgerät vorgenommen werden. Ein zentrales Rechenmodul einer Parkleitzentrale kann so deutlich entlastet werden. Da das mobile Handgerät in der Regel lediglich Daten betreffend die Parklücke für ein jeweiliges Kraftfahrzeug auswertet, ist in aller Regel keine Überforderung des mobilen Handgeräts gegeben. Da viele Besitzer eines Kraftfahrzeugs ebenfalls ein Smartphone besitzen, kann so das Klassifizieren der Daten auf mehrere Smartphones verteilt werden. Das mobile Handgerät kann demnach als Smartphone, Tablet oder als Mini-Computer (PDA) ausgebildet sein.

Eine weitere Variante dieser Erfindung sieht vor, dass die Daten verschlüsselt übermittelt werden. Viele Benutzer des Kraftfahrzeugs legen hohen Wert auf eine Sicherheit ihrer Daten. Es ist meistens nicht erwünscht, dass fremde Personen den genauen Parkplatz beziehungsweise Abstellort des eigenen Kraftfahrzeugs erfahren. Aus diesem Grund werden die Daten betreffend die Parklücke bevorzugt verschlüsselt übermittelt. Die Verschlüsselung erstreckt sich insbesondere nicht nur auf das Übermitteln der Daten betreffend die Parklücke, sondern die Verschlüsselung kann sich auch auf das Übermitteln der klassifizierten Daten erstrecken, welche an ein Rechenmodul der Parkleitzentrale gesendet werden können. Somit kann gewährleistet werden, dass lediglich ein berechtigter Benutzer Informationen beziehungsweise Metadaten bezüglich des Parkplatzes erhält.

Eine weitere Ausführungsform dieser Erfindung sieht vor, dass das mobile Handgerät anhand der abgerufenen Daten für das Klassifizieren eine Musteranalyse betreffend den möglichen Parkplatz durchführt. Eine Musteranalyse kann beispielsweise anhand mehrerer Bilder vorgenommen werden, welche mittels einer Kamera erfasst werden können. Dabei kann das Bild als Ganzes als Muster aufgefasst werden, welches in Untermuster zerteilt werden kann. Die jeweiligen Untermuster können hinsichtlich des potentiellen Parkplatzes detaillierter untersucht werden. Hat beispielsweise eine Parklücke zwar genügend Fläche zum Abstellen eines Kraftfahrzeugs, so bedeutet dies noch nicht zwangsläufig, dass es sich um einen tatsächlichen Parkplatz handelt. Beispielsweise kann die Parklücke eine gebogene Form aufweisen, womit die Parklücke sich nicht als Parkplatz eignen würde. Die Musteranalyse kann in diesem Fall diese gebogene Form der Parklücke, welche als bananenförmig beschrieben werden kann, erkennen. Damit kann das mobile Handgerät feststellen, dass diese bananenförmige Parklücke sich nicht als Parkplatz für das Kraftfahrzeug eignet. Damit kann mithilfe der Musteranalyse festgestellt werden, ob die Parklücke eine atypische Form aufweist, welche das Abstellen des Kraftfahrzeugs erschwert oder nicht möglich macht.

Eine weitere Ausführungsform dieser Erfindung sieht vor, dass das mobile Handgerät die Daten von einer Computereinrichtung abruft und nach dem Klassifizieren ein Ergebnis betreffend die Parklücke an die Computereinrichtung übermittelt. Die Computereinrichtung kann innerhalb des Kraftfahrzeugs angeordnet sein oder außerhalb des Kraftfahrzeugs angeordnet sein. Ist die Computereinrichtung innerhalb des Kraftfahrzeugs angeordnet, so ist sie häufig Teil eines Fahrzeugassistenzsystems. In der Regel ist diese Computereinrichtung mit verschiedenen Sensoren des Kraftfahrzeugs verbunden und kann so die Daten betreffend die Parklücke erheben. Diese Sensoren können beispielsweise Kameras, Ultraschallsensoren, Lidar-Sensoren, GPS-Sensoren oder WLAN-Module sein. Es ist auch möglich, dass lediglich ein einziger Sensor die Daten betreffend die Parklücke erfasst. Ist die Computereinrichtung außerhalb des Kraftfahrzeugs angeordnet so kann von einer externen Computereinrichtung gesprochen werden. In diesem Fall wird häufig von einem Cloudserver gesprochen. Dieser Cloudserver kann beispielsweise Teil eines Parkleitsystems für ein Parkhaus sein. Mehrere Parkhäuser können sich jedoch auch einen Cloudserver teilen. Somit können auf dem Cloudserver zu mehreren Parkhäusern Daten betreffend von mehreren Parklücken abrufbar vorhanden sein. Da das mobile Handgerät die Daten betreffend die Parklücke näher klassifiziert, ist es besonders vorteilhaft diese aufbereiteten Daten beziehungsweise Metadaten der Computereinrichtung zur Verfügung zu stellen. Somit können andere Benutzer ebenfalls in den Genuss dieser Metadaten kommen.

Eine weitere Ausführungsform dieser Erfindung sieht vor, dass das mobile Handgerät das Ergebnis in Abhängigkeit von einem Freigabesignal an die Computereinrichtung übermittelt. Das Freigabesignal kann dabei durch den Benutzer des mobilen Handgeräts erzeugt werden. Dies bedeutet, dass das Ergebnis des Klassifizierens durch das mobile Handgerät nur dann an die Computereinrichtung übermittelt wird, wenn der Benutzer dazu seine Erlaubnis in Form des Freigabesignals erteilt. In vielen Fällen ist das mobile Handgerät als Smartphone ausgebildet. Hier kann der Benutzer durch eine globale Einstellung in dem Smartphone die Erlaubnis erteilen, dass das mobile Handgerät das Ergebnis des Klassifizierens an die Computereinrichtung übermittelt. Somit kann der Nutzer des Smartphones beziehungsweise des mobilen Handgeräts über die Weiterverwendung der aufbereiteten Daten entscheiden. Datenschutzrechtliche Bedenken können so entkräftet werden und das Vertrauen in die Nutzung dieser Technik kann so gesteigert werden.

Eine weitere Ausführungsform sieht vor, dass das mobile Handgerät einen dem Kraftfahrzeug zugeordneten Benutzer identifiziert. In den meisten Fällen ist das mobile Handgerät einem oder mehreren Benutzern zugeordnet. Dabei ist es oft nicht erwünscht, dass fremde Benutzer das erfindungsgemäße Verfahren ausführen können. Daher sieht diese Ausführungsform der Erfindung explizit eine Identifikation des Benutzers durch das mobile Handgerät vor. Das mobile Handgerät würde das Klassifizieren der übermittelten Daten betreffend die Parklücke nur dann ausführen, wenn der Benutzer des mobilen Handgeräts genau dem Kraftfahrzeug zugeordneten Benutzer entspricht. Somit kann verhindert werden, dass das mobile Handgerät fälschlicherweise zu Unrecht durch eine fremde Person missbraucht wird.

Eine weitere Variante dieser Erfindung sieht vor, dass das Identifizieren mittels einer Eingabe eines PIN-Codes und/oder mittels biometrischer Daten des Benutzers erfolgt. In der Regel ist der PIN-Code lediglich dem berechtigten Benutzer bekannt. Die biometrischen Daten des Benutzers können den Benutzer beschreiben. Als biometrische Daten können beispielsweise der Klang einer Stimme, ein Fingerabdruck, eine Gesichtsform, eine Iris des Auges in Betracht kommen. Diese biometrischen Daten können in den allermeisten Fällen eindeutig einer ganz bestimmten Person zugeordnet werden. Durch das Verwenden des PIN-Codes und/oder der biometrischen Daten zum Identifizieren kann sichergestellt werden, dass ausschließlich der berechtigte Benutzer das Klassifizieren der übermittelten Daten ausführen kann.

Eine weitere Ausführungsform dieser Erfindung sieht vor, dass das mobile Handgerät zusätzlich zum Klassifizieren der Daten Steuersignale zum Manövrieren des Kraftfahrzeugs erzeugt. Als Beispiel sei hier das Remoteparken mittels eines Smartphones genannt. Beim Remoteparken wird das Kraftfahrzeug vorzugsweise mittels des mobilen Handgeräts ferngesteuert. Das mobile Handgerät fungiert in diesem Fall wie eine Art "Fernbedienung des Kraftfahrzeugs". In vielen Fällen muss beim Remoteparken kein menschlicher Fahrer innerhalb des Kraftfahrzeugs sein. Jedoch sehen bis jetzt die meisten Remoteparken-Systeme vor, dass der Fahrer den Remoteparkvorgang ständig überwacht und jederzeit den Vorgang abbrechen kann. So wird beispielsweise versucht, mittels einer Kreisbewegung eines Fingers auf einer Oberfläche des mobilen Handgeräts sicherzustellen, dass der Fahrer am Remoteparken aktiv beteiligt sein muss.

Grundsätzlich kann sich das mobile Handgerät mit einem Fahrzeugassistenzsystem vernetzen. Damit kann das mobile Handgerät Steuersignale zu dem Fahrzeugassistenzsystem übertragen. Somit kann das mobile Handgerät nicht nur zum Erkennen geeigneter Parkplätze verwendet werden, sondern darüber hinaus zusätzlich zum Einparken des Kraftfahrzeugs selbst. In diesem Fall kann die Parklücke sogar kleiner als üblich ausfallen, da ein Aussteigen des Fahrers beziehungsweise Nutzers des Kraftfahrzeugs nicht mehr nötig ist. Das heißt eine Parklücke, welche üblicherweise zu klein zum Einparken wäre, kann in diesem Fall dennoch als Abstellort für das Kraftfahrzeug gewählt werden. In diesem Fall kann der Benutzer des Kraftfahrzeugs vor einem Einparkvorgang sein Kraftfahrzeug verlassen und das Kraftfahrzeug mittels des mobilen Handgeräts in den Parkplatz manövrieren. Dazu kann der Benutzer des Kraftfahrzeugs mittels seines mobilen Handgeräts Steuersignale erzeugen, welche das Kraftfahrzeug manövrieren. Somit kann das mobile Handgerät dem Benutzer des Kraftfahrzeugs dabei helfen, nicht nur einen geeigneten Parkplatz zu finden, sondern sein Kraftfahrzeug auch in diesen Parkplatz zu manövrieren. Wenn das mobile Handgerät die Funktion Remoteparken berücksichtigen kann, kann das mobile Handgerät auch Parkplätze berücksichtigen, welche im Vergleich zu üblichen Parkplätzen schmäler sind, da nicht mehr ausgestiegen werden muss.

Eine weitere Variante dieser Erfindung sieht vor, dass das mobile Handgerät ein Ergebnis des Klassifizierens auf einem internen Speicher des mobilen Handgeräts speichert. In vielen Fällen ist es erwünscht, dass das Ergebnis des Klassifizierens mit anderen Benutzern geteilt wird. Dies kann beispielsweise durch ein Übermitteln der Daten an die externe Computereinrichtung erfolgen. Innerhalb von Gebäuden kann es jedoch häufig vorkommen, dass eine Datenverbindung zu dieser externen Computereinrichtung nicht vorhanden ist. Daher ist es sehr vorteilhaft, das Ergebnis des Klassifizierens auf dem internen Speicher des mobilen Handgeräts temporär zu speichern. Das Ergebnis des Klassifizierens kann dann später übermittelt werden, wenn eine Datenverbindung zu der externen Computereinrichtung wieder vorhanden ist. Somit kann sichergestellt werden, dass die von dem mobilen Handgerät aufbereiteten Daten betreffend die Parklücke nicht verloren gehen und von anderen Benutzern genutzt werden können.

Eine weitere Variante dieser Erfindung sieht vor, dass mittels einer WLAN-basierten Ortung eine Position des mobilen Handgeräts bestimmt wird. Häufig wird eine Ortung mittels GPS durchgeführt, wie es bei Navigationsgeräten üblich ist. Diese Technik kann jedoch innerhalb von Gebäuden nicht zur Verfügung stehen. In dieser Situation sieht diese Variante der Erfindung vor, dass die Position des mobilen Handgeräts mittels der WLAN-basierten Ortung festgestellt wird. Somit kann sichergestellt werden, dass die durch das mobile Handgerät aufbereiteten Daten stets einer Position zugeordnet werden können. Andere Fahrer von Kraftfahrzeugen können so im Vorfeld über mögliche freie Parkplätze informiert werden. Dies kann die Parkplatzsuche erheblich vereinfachen und verkürzen.

Die Erfindung sieht ein Parkassistenzsystem eines Kraftfahrzeugs mit einem Rechenmodul vor, welches eine erste Schnittstelle zum Kommunizieren mit einem mobilen Handgerät aufweist. Das Rechenmodul ist zudem ausgebildet, Daten betreffend eine Parklücke für ein Kraftfahrzeug zu erzeugen. Das Parkassistenzsystem weist ferner das mobile Handgerät auf, welches eine zweite Schnittstelle zum Kommunizieren mit dem Rechenmodul und ein neuronales Netz aufweist. Dabei ist das mobile Handgerät ausgebildet, die übermittelten Daten betreffend die Parklücke mittels des neuronalen Netzes zu klassifizieren. Durch das Klassifizieren werden Informationen über die Parklücke in Form von Metadaten ermittelt und einem Fahrer des Kraftfahrzeugs zur Verfügung gestellt. Das mobile Handgerät übermittelt nach dem Klassifizieren ein Ergebnis betreffend die Parklücke an das Rechenmodul.

Das Rechenmodul kann die Daten betreffend die Parklücke zu dem mobilen Handgerät übertragen oder das mobile Handgerät kann von sich aus die Daten von dem Rechenmodul abrufen. Dabei erfolgt die Kommunikation zwischen dem Rechenmodul und dem mobilen Handgerät über die erste Schnittstelle und die zweite Schnittstelle. Das Rechenmodul kann innerhalb eines Fahrzeugassistenzsystems angeordnet sein beziehungsweise in dem Fahrzeugassistenzsystem implementiert sein.

In einer Ausführungsform, die nicht durch die beanspruchte Erfindung abgedeckt ist, kann das Rechenmodul außerhalb des Kraftfahrzeugs angeordnet sein. In diesem Fall kann von einem externen Rechenmodul gesprochen werden. Das Rechenmodul kann insbesondere als externer Cloudserver ausgebildet sein. Die genannten Beispiele und Vorteile der vorangegangenen Ausführungsformen und Varianten gelten sinngemäß für das Parkassistenzsystem.

Eine weitere Ausführungsform sieht ein Parkassistenzsystem mit einer Sensoreinrichtung vor, die ausgebildet ist, Informationen zu einer Umgebung des Kraftfahrzeugs zu erfassen und diese Informationen dem mobilen Handgerät zu übermitteln. Die Sensoreinrichtung ist vorzugsweise in oder an dem Kraftfahrzeug angeordnet. Die Sensoreinrichtung kann über einen oder mehrere Sensoren verfügen. In der Regel verfügt die Sensoreinrichtung über mehrere Sensoren. Diese Sensoren dienen dabei insbesondere zur Generierung der die Parklücke betreffenden Daten. Somit können die die Parklücke betreffenden Daten vor Ort ermittelt werden. Sie können insbesondere auch dann ermittelt werden, wenn zu einer externen Computereinrichtung keine Funkverbindung möglich ist. Somit kann sichergestellt werden, dass stets Daten betreffend die Parklücke erzeugt werden können und diese im weiteren Verlauf durch das mobile Handgerät klassifiziert werden können. Die Ausfallsicherheit des erfindungsgemäßen Verfahrens kann so gesteigert werden.

Es kann vorgesehen sein, dass das mobile Handgerät Teil der Sensoreinrichtung ist. In diesem Fall wird das mobile Handgerät selbst dazu verwendet, Daten betreffend die Parklücke bereitzustellen. So kann das mobile Handgerät zum Beispiel als Smartphone ausgeführt sein, welches eine Kamera aufweist. Damit könnten Bilder von einem potentiellen Parkplatz gemacht werden. Im weiteren Verlauf kann das mobile Handgerät diese Daten bewerten beziehungsweise klassifizieren. In diesem Fall würde das Übermitteln der Daten aus Schritt a) lediglich eine "interne Bereitstellung" der Daten bedeuten. Das mobile Handgerät kann nicht nur zum Klassifizieren der Daten eingesetzt werden. Darüber hinaus kann es prinzipiell auch zur Datenerfassung von Daten zu potentiellen Parkplätzen verwendet werden.

Eine weitere Ausführungsform dieser Erfindung sieht ein Parkassistenzsystem vor, wobei die Sensoreinrichtung einen Ultraschallsensor, eine Kamera, einen Lidar-Sensor und/oder ein WLAN-Modul aufweist. Mithilfe eines Ultraschallsensors können Parklücken zumindest grob erfasst werden. Ultraschallsensoren werden häufig zur Kollisionsvermeidung eingesetzt. Eine Kamera dient dazu, Bilder von der Umgebung des Kraftfahrzeugs aufzunehmen. Mittels einer entsprechenden Bildverarbeitung können so potentielle Parklücken erkannt werden. Das mobile Handgerät kann mittels seines neuronalen Netzes diese von der Kamera erzeugten Bilder detaillierter untersuchen und somit die Klassifizierung durchführen. Mithilfe des WLAN-Moduls kann das mobile Handgerät auch dann geortet werden, wenn innerhalb eines Gebäudes die GPS-Ortung nicht funktioniert. Der Lidar-Sensor kann darüber hinaus detaillierte Daten seiner Umgebung bereitstellen. Idealerweise verfügt die Sensoreinrichtung über mehrere unterschiedliche Sensoren, welche sich in ihrer Wirkung idealerweise ergänzen. Somit können aussagekräftige Daten betreffend die Parklücke erzeugt werden. Je detaillierter und aussagekräftiger diese Daten ausgestaltet sind, desto besser kann das mobile Handgerät diese Daten im Rahmen der Klassifizierung aufbereiten. Das mobile Handgerät kann Informationen von unterschiedlichen Sensoren zum Klassifizieren der Daten betreffend die Parklücke verwerten.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Der Schutzumfang der Erfindung ist durch die nachstehenden Patentansprüche definiert.

Die Erfindung wird nun anhand von bevorzugten Ausführungsbeispielen sowie unter Bezugnahme auf die beigefügten Zeichnungen näher erläutert. Dabei zeigt:
- Fig. 1: ein Kraftfahrzeug mit einem Parkassistenzsystem; und
- Fig. 2: eine schematische Darstellung des Kraftfahrzeugs mit weiteren Kraftfahrzeugen und einer externen Computereinrichtung.

In den Figuren werden gleiche und funktionsgleiche Elemente mit den gleichen Bezugszeichen versehen.

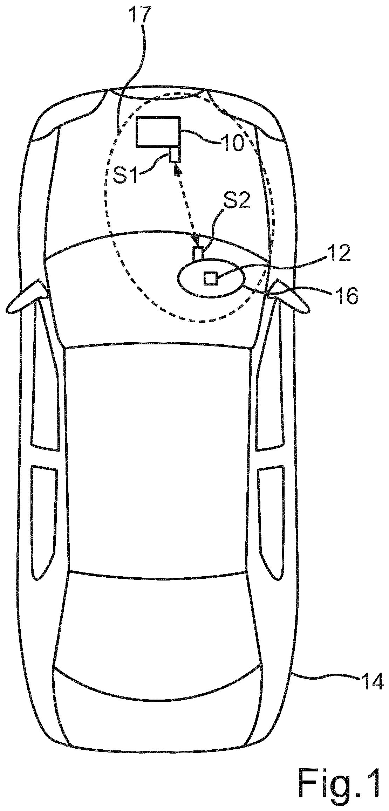

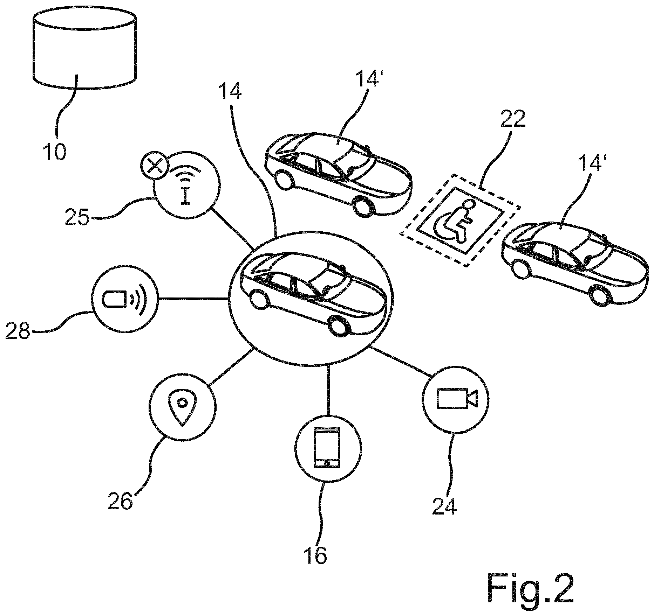

Fig. 1 zeigt ein Kraftfahrzeug 14 gemäß einer Ausführungsform in einer Draufsicht. Das Kraftfahrzeug 14 weist ein Parkassistenzsystem 17 auf. Das Parkassistenzsystem 17 beinhaltet weitere Komponenten. Das Parkassistenzsystem 17 weist ein Rechenmodul 10 auf, welches über eine erste Schnittstelle S1 verfügt. Eine zweite Schnittstelle S2 ist an einem mobilen Handgerät 16 angeordnet. Das mobile Handgerät 16 verfügt über ein neuronales Netz 12. Das mobile Handgerät kann mit dem Rechenmodul 10 über die beiden Schnittstellen S1 und S2 kommunizieren. Zwischen diesen beiden Schnittstellen werden Informationen betreffend eine Parklücke 22 ausgetauscht. Das Rechenmodul 10 kann die Daten betreffend die Parklücke 22 an das mobile Handgerät 16 übertragen beziehungsweise das mobile Handgerät 16 kann diese Daten von dem Rechenmodul 10 anfordern. Das Kommunizieren dieser beiden Geräte wird in Fig. 1 durch einen gestrichelten Pfeil angedeutet, welcher die erste Schnittstelle S1 mit der zweiten Schnittstelle S2 verbindet. Im Beispiel von Fig. 1 ist das Rechenmodul 10 in dem Kraftfahrzeug 14 angeordnet. Im Beispiel von Fig. 2 ist das Rechenmodul außerhalb des Kraftfahrzeugs angeordnet.

Fig. 2 zeigt beispielhaft eine Situation, wie sie in Parkhäusern häufig auftritt. Im Beispiel von Fig. 2 sei angenommen, dass das Kraftfahrzeug 14 sowie die weiteren unterschiedlichen Kraftfahrzeuge 14' sich in einem Parkhaus befinden. Ein Fahrer des Kraftfahrzeugs 14 sei beispielsweise auf der Suche nach einem Parkplatz. Das Kraftfahrzeug 14 kann über mehrere unterschiedliche Sensoren verfügen. In diesem Beispiel verfügt das Kraftfahrzeug 14 über eine Kamera 24, das mobile Handgerät 16, einen GPS-Sensor 26, einen Ultraschallsensor 28 sowie ein WLAN-Modul 25. All diese Sensoren können zu einer Sensoreinrichtung zusammengefasst werden. Das mobile Handgerät 16 kann sich mittels einer Bluetooth-Verbindung mit dem Fahrzeugassistenzsystem des Kraftfahrzeugs 14 verbinden. Im Beispiel von Fig. 2 könnte die Kamera 24 Bilder von der Parklücke 22 aufnehmen. Der Ultraschallsensor 28 könnte beispielsweise feststellen, dass im Bereich der Parklücke 22 prinzipiell ausreichend Platz für das Kraftfahrzeug 14 vorhanden wäre. Diese Daten werden im weiteren Verlauf dem mobilen Handgerät 16 übermittelt. Das mobile Handgerät 16 kann anstelle dessen diese Daten direkt anfordern beziehungsweise abrufen. Es spielt grundsätzlich keine Rolle, ob die Daten betreffend die Parklücke 22 von der Sensoreinrichtung des Kraftfahrzeugs 14 gewonnen wurden oder ob diese Daten durch das Rechenmodul 10 übermittelt wurden. Im Beispiel von Fig. 2 ist das Rechenmodul 10 nicht länger Teil des Kraftfahrzeugs 14, sondern stellt in diesem Fall einen externen Cloudserver dar. Dieser externe Cloudserver kann beispielsweise Teil eines Parkleitsystems sein.

Im Beispiel von Fig. 2 klassifiziert das mobile Handgerät 16 die Daten betreffend die Parklücke 22. Dabei bedient sich das mobile Handgerät 16 insbesondere dem neuronalen Netz 12. In diesem Fall kann das mobile Handgerät 16 erkennen, dass im Bereich der Parklücke 22 ein Behindertensymbol vorhanden ist. Dies bedeutet erfahrungsgemäß, dass dieser Parkplatz nicht für alle Fahrer freigegeben ist. Es sei angenommen, dass ein Fahrer des Kraftfahrzeugs 14 keine Berechtigung zum Parken in der Parklücke 22 hat. In diesem Fall teilt das mobile Handgerät 16 dem Benutzer des Kraftfahrzeugs 14 mit, dass er die Parklücke 22 nicht benutzen darf. Das mobile Handgerät 16 kann mittels einer Schilderkennung weitere nützliche Metadaten betreffend die Parklücke 22 erzeugen und bereitstellen. Beispielsweise könnte sich im Bereich der Parklücke 22 ein QR-Code befinden, den das mobile Handgerät 16 auslesen und bewerten kann. Das mobile Handgerät kann ferner statistische Informationen zu dieser Parklücke 22 abrufen beziehungsweise die neu aufbereiteten Daten dieser Statistik hinzufügen.

Im vorliegenden Fall der Fig. 2 kann das mobile Handgerät 16 die Daten betreffend die Parklücke 22 aufbereiten und in Form von Metadaten klassifizieren. Vorzugsweise speichert das mobile Handgerät 16 diese aufbereiteten Metadaten in einem internen Speicher ab. Dies ist besonders dann vorteilhaft, wenn vorübergehend keine Datenverbindung zu dem Rechenmodul 10 vorhanden ist. Verlässt das Kraftfahrzeug 14 im Beispiel von Fig. 2 das Parkhaus, so kann das mobile Handgerät 16 meistens spätestens dann eine Datenverbindung zu dem Rechenmodul 10 aufbauen und die aufbereiteten Daten dem Rechenmodul 10 übertragen. Dies kann jedoch zusätzlich von der Erlaubnis des Benutzers des Kraftfahrzeugs 14 abhängig sein.

Das Klassifizieren der Daten betreffend die Parklücke kann innerhalb einer App des mobilen Handgeräts 16 realisiert werden. Da das mobile Handgerät 16 das Klassifizieren durchführt, kann das Erzeugen von Metadaten betreffend die Parklücke 22 auch unabhängig von einer externen Computereinrichtung erfolgen. Das Klassifizieren der Daten bezüglich der Parklücke 22 kann so auch in Bereichen eines Parkhauses erfolgen, in denen keine Datenverbindung möglich ist. Somit kann die Datenbasis betreffend die Daten der möglichen Parklücken vergrößert werden. Diese vergrößerte Datenbasis kann wiederum zu einem effektiven Trainieren des neuronalen Netzes 12 verwendet werden. Besonders vorteilhaft ist der Umstand, dass keine dauerhafte Datenverbindung zu einer externen Computereinrichtung notwendig ist, um die Daten betreffend die Parklücke 22 zu klassifizieren. Damit kann die Latenzzeit reduziert werden und das mobile Handgerät 16 kann eine rasche Rückmeldung bezüglich eines potentiellen Parkplatzes erzeugen. Das Klassifizieren funktioniert auch dann noch, wenn das mobile Handgerät keine Datenverbindung mit einer externen Einheit hat beziehungsweise diese Datenverbindung verliert. Sobald das mobile Handgerät 16 die Daten betreffend die Parklücke 22 erhalten hat, kann die Klassifizierung durchgeführt werden. Bereits als Parkplätze klassifizierte Daten können innerhalb einer App zwischengespeichert werden. Damit können andere Benutzer diese Informationen für sich nutzen und schneller und bequemer einen Parkplatz finden.

Das mobile Handgerät 16 kann insbesondere erkennen, ob die Parklücke als Parkplatz geeignet ist oder nicht. Das mobile Handgerät 16 kann ferner erkennen, ob das Kraftfahrzeug 14 vorwärts, rückwärts oder seitlich eingeparkt werden sollte. Darüber hinaus kann das mobile Handgerät 16 weitere Metadaten wie zum Beispiel die Parkgebühren oder Parkstatistiken erzeugen und für andere Nutzer bereitstellen. Das Bereitstellen der Metadaten für andere Benutzer erfolgt vorzugsweise durch Übermitteln der aufbereiteten Daten an das Rechenmodul 10. Somit kann das mobile Handgerät 16 Daten von der externen Computereinrichtung abrufen und somit von Informationen von anderen mobilen Handgeräten profitieren.

So kann beispielsweise ein Freund des Fahrers sich ebenfalls in einem Parkhaus aufhalten, in dem der Fahrer des Kraftfahrzeugs einen Parkplatz sucht. Dieser Freund könnte zum Beispiel eine Parklücke 22 entdecken und mittels seines Smartphones dem mobilen Handgerät 16 des Fahrers Daten betreffend diese Parklücke übermitteln. Denkbar wäre, dass das mobile Handgerät 16 von dem Smartphone ein Foto der Parklücke 22 erhält. Das mobile Handgerät 16 kann dieses Foto analysieren und die Daten (hier das Foto) klassifizieren. Anstelle des Fotos von einem anderen Smartphone kann das mobile Handgerät 16 auf Daten von einem Cloudserver zugreifen und diese Daten zum Klassifizieren verwenden. Idealerweise stellt dieser Cloudserver aktuelle Daten zu Parklücken 22 bereit. Somit kann der Fahrer des Kraftfahrzeugs schneller einen für ihn passenden Parkplatz finden. Dies kann die Parkplatzsuche abkürzen.

## Patentansprüche

1. Verfahren zum Klassifizieren von Daten betreffend eine Parklücke (22) für ein Kraftfahrzeug (14) mittels eines mobilen Handgeräts (16), wobei durch das Klassifizieren Informationen über die Parklücke in Form von Metadaten ermittelt werden und einem Fahrer des Kraftfahrzeugs (14) zur Verfügung gestellt werden, durch Ausführen folgender Verfahrensschritte:
a) Übermitteln der Daten, welche einen potentiellen Parkplatz für das Kraftfahrzeug (14) darstellen, zu dem mobilen Handgerät (16), wobei das mobile Handgerät (16) die Daten von einem Rechenmodul (10) des Kraftfahrzeugs (14) abruft, und
b) Klassifizieren der übermittelten Daten betreffend die Parklücke (22) durch das mobile Handgerät (16), wobei das mobile Handgerät (16) ein neuronales Netz (12) aufweist und das neuronale Netz (12) zum Klassifizieren der übermittelten Daten einsetzt, wobei das mobile Handgerät (16) nach dem Klassifizieren ein Ergebnis betreffend die Parklücke (22) an das Rechenmodul (10) des Kraftfahrzeugs (14) übermittelt.

2. Verfahren nach Anspruch 1, wobei die Daten verschlüsselt übermittelt werden.

3. Verfahren nach einem der vorigen Ansprüche, wobei das mobile Handgerät (16) anhand der abgerufenen Daten für das Klassifizieren eine Musteranalyse betreffend den möglichen Parkplatz durchführt.

4. Verfahren nach einem der vorhergehenden Ansprüche, wobei das mobile Handgerät (16) das Ergebnis in Abhängigkeit von einem Freigabesignal an das Rechenmodul (10) übermittelt.

5. Verfahren nach einem der vorigen Ansprüche, wobei das mobile Handgerät (16) einen dem Kraftfahrzeug (14) zugeordneten Benutzer identifiziert.

6. Verfahren nach Anspruch 5, wobei das Identifizieren mittels einer Eingabe eines PIN-Codes und/oder mittels biometrischer Daten des Benutzers erfolgt.

7. Verfahren nach einem der vorigen Ansprüche, wobei das mobile Handgerät (16) zusätzlich zum Klassifizieren der Daten Steuersignale zum Manövrieren des Kraftfahrzeugs (14) erzeugt.

8. Verfahren nach Anspruch 7, wobei das Kraftfahrzeug (14) mittels des mobilen Handgeräts (16) ferngesteuert wird beim Remoteparken.

9. Verfahren nach einem der vorigen Ansprüche, wobei das mobile Handgerät (16) ein Ergebnis des Klassifizierens auf einem internen Speicher des mobilen Handgeräts (16) speichert.

10. Verfahren nach einem der vorigen Ansprüche, wobei mittels einer WLAN-basierten Ortung eine Position des mobilen Handgeräts (16) bestimmt wird.

11. Verfahren nach einem der vorhergehenden Ansprüche, wobei das Rechenmodul (10) Teil eines Fahrzeugassistenzsystems des Kraftfahrzeugs (14) ist, wobei das Rechenmodul (10) mit einem oder verschiedenen Sensoren des Kraftfahrzeugs (14) verbunden ist und so Daten betreffend die Parklücke (22) erheben kann.

12. Verfahren nach einem der vorherigen Ansprüche, wobei sich das mobile Handgerät (16) mit einem Fahrzeugassistenzsystem des Kraftfahrzeugs (14) vernetzt, insbesondere wobei das mobile Handgerät (16) Steuersignale zu dem Fahrzeugassistenzsystem übertragen kann.

13. Verfahren nach einem der vorherigen Ansprüche, wobei das mobile Handgerät (16) Daten zu potentiellen Parkplätzen von einer Parkleitzentrale eines Parkhauses oder von einem anderen verschiedenen mobilen Handgerät erhält, insbesondere wobei die Daten von einem Rechenmodul einer Parkleitzentrale oder dem anderen verschiedenen mobilen Handgerät dem mobilen Handgerät (16) übermittelt werden.

14. Verfahren nach einem der vorherigen Ansprüche, wobei die Metadaten von dem mobilen Handgerät (16) an ein Rechenmodul einer Parkleitzentrale übermittelt werden.

15. Parkassistenzsystem (17) eines Kraftfahrzeugs (14) mit
- einem Rechenmodul (10), welches eine erste Schnittstelle (S1) zum Kommunizieren mit einem mobilen Handgerät (16) aufweist und ausgebildet ist, Daten betreffend eine Parklücke (22) für das Kraftfahrzeug (14) zu erzeugen, wobei das mobile Handgerät (16) die Daten von dem Rechenmodul (10) abruft, und
- dem mobilen Handgerät (16), welches eine zweite Schnittstelle (S2) zum Kommunizieren mit dem Rechenmodul (10) und ein neuronales Netz (12) aufweist, wobei das mobile Handgerät (16) ausgebildet ist, die übermittelten Daten betreffend die Parklücke (22) mittels des neuronalen Netzes (12) zu klassifizieren, wobei durch das Klassifizieren Informationen über die Parklücke in Form von Metadaten ermittelt werden und einem Fahrer des Kraftfahrzeugs (14) zur Verfügung gestellt werden, wobei das mobile Handgerät (16) nach dem Klassifizieren ein Ergebnis betreffend die Parklücke (22) an das Rechenmodul (10) übermittelt.

## Claims

1. Method for classifying data relating to a parking space (22) for a motor vehicle (14) by means of a mobile handheld device (16), wherein information about the parking space is determined in the form of meta data by the classification and is made available to a driver of the motor vehicle (14), by carrying out the following method steps:
a) transmitting the data, which represent a potential parking area for the motor vehicle (14), to the mobile handheld device (16), wherein the mobile handheld device (16) retrieves the data from a computing module (10) of the motor vehicle (14), and
b) classifying the transmitted data relating to the parking space (22) by way of the mobile handheld device (16), wherein the mobile handheld device (16) has a neural network (12) and uses the neural network (12) to classify the transmitted data, wherein the mobile handheld device (16) transmits a result relating to the parking space (22) to the computing module (10) of the motor vehicle (14) after classification.

2. Method according to Claim 1, wherein the data are transmitted in encrypted form.

3. Method according to one of the preceding claims, wherein the mobile handheld device (16) carries out a pattern analysis relating to the possible parking area on the basis of the retrieved data for the classification.

4. Method according to one of the preceding claims, wherein the mobile handheld device (16) transmits the result to the computing module (10) on the basis of an enable signal.

5. Method according to one of the preceding claims, wherein the mobile handheld device (16) identifies a user assigned to the motor vehicle (14).

6. Method according to Claim 5, wherein the identification takes place by means of an input of a PIN code and/or by means of biometric data relating to the user.

7. Method according to one of the preceding claims, wherein the mobile handheld device (16), in addition to classifying the data, generates control signals for manoeuvring the motor vehicle (14).

8. Method according to Claim 7, wherein the motor vehicle (14) is remotely controlled by means of the mobile handheld device (16) during remote parking.

9. Method according to one of the preceding claims, wherein the mobile handheld device (16) stores a result of the classification in an internal memory of the mobile handheld device (16) .

10. Method according to one of the preceding claims, wherein a position of the mobile handheld device (16) is determined by means of WLAN-based positioning.

11. Method according to one of the preceding claims, wherein the computing module (10) is part of a vehicle assistance system of the motor vehicle (14), wherein the computing module (10) is connected to one or various sensors of the motor vehicle (14) and can thus collect data relating to the parking space (22).

12. Method according to one of the preceding claims, wherein the mobile handheld device (16) is networked to a vehicle assistance system of the motor vehicle (14), in particular wherein the mobile handheld device (16) can transmit control signals to the vehicle assistance system.

13. Method according to one of the preceding claims, wherein the mobile handheld device (16) receives data relating to potential parking areas from a parking control centre of a car park or from another, different mobile handheld device, in particular wherein the data are transmitted from a computing module of a parking control centre or the other, different mobile handheld device to the mobile handheld device (16).

14. Method according to one of the preceding claims, wherein the meta data are transmitted from the mobile handheld device (16) to a computing module of a parking control centre.

15. Parking assistance system (17) of a motor vehicle (14), having
- a computing module (10) which has a first interface (S1) for communicating with a mobile handheld device (16) and is designed to generate data relating to a parking space (22) for the motor vehicle (14), wherein the mobile handheld device (16) retrieves the data from the computing module (10), and
- the mobile handheld device (16) which has a second interface (S2) for communicating with the computing module (10) and a neural network (12), wherein the mobile handheld device (16) is designed to classify the transmitted data relating to the parking space (22) by means of the neural network (12), wherein information about the parking space is determined in the form of meta data by the classification and is made available to a driver of the motor vehicle (14), wherein the mobile handheld device (16) transmits a result relating to the parking space (22) to the computing module (10) after classification.

## Revendications

1. Procédé de classification de données concernant une place de stationnement (22) pour un véhicule automobile (14) au moyen d'un appareil portatif mobile (16), la classification permettant de déterminer des informations sur la place de stationnement sous forme de métadonnées et de les mettre à la disposition d'un conducteur du véhicule automobile (14), en exécutant les étapes de procédé suivantes :
a) transmettre les données, qui représentent une place de stationnement potentielle pour le véhicule automobile (14), à l'appareil portatif mobile (16), l'appareil portatif mobile (16) appelant les données d'un module informatique (10) du véhicule automobile (14), et
b) par l'appareil portatif mobile (16), classer les données transmises concernant la place de stationnement (22), l'appareil portatif mobile (16) comportant un réseau neuronal (12) et mettant en œuvre le réseau neuronal (12) pour classifier les données transmises, l'appareil portatif mobile (16) transmettant, après classification, un résultat concernant la place de stationnement (22) au module informatique (10) du véhicule automobile (14).

2. Procédé selon la revendication 1, dans lequel les données sont transmises sous forme cryptée.

3. Procédé selon l'une des revendications précédentes, dans lequel l'appareil portatif mobile (16) effectue une analyse de modèle concernant la place de stationnement possible à l'aide des données appelées pour la classification.

4. Procédé selon l'une des revendications précédentes, dans lequel l'appareil portatif mobile (16) transmet le résultat au module informatique (10) en fonction d'un signal d'autorisation.

5. Procédé selon l'une des revendications précédentes, dans lequel l'appareil portatif mobile (16) identifie un utilisateur associé au véhicule automobile (14).

6. Procédé selon la revendication 5, dans lequel l'identification est réalisée au moyen d'une saisie d'un code PIN et/ou au moyen de données biométriques de l'utilisateur.

7. Procédé selon l'une des revendications précédentes, dans lequel l'appareil portatif mobile (16) génère, en plus de la classification des données, des signaux de commande pour manoeuvrer le véhicule automobile (14).

8. Procédé selon la revendication 7, dans lequel le véhicule automobile (14) est télécommandé au moyen de l'appareil portatif mobile (16) lors du stationnement à distance.

9. Procédé selon l'une des revendications précédentes, dans lequel l'appareil portatif mobile (16) enregistre un résultat de la classification dans une mémoire interne du combiné mobile (16).

10. Procédé selon l'une des revendications précédentes, dans lequel une position du combiné mobile (16) est déterminée au moyen d'un positionnement basé sur WLAN.

11. Procédé selon l'une des revendications précédentes, dans lequel le module informatique (10) fait partie d'un système d'assistance au véhicule du véhicule automobile (14), le module informatique (10) étant connecté à un ou plusieurs capteurs du véhicule automobile (14) et étant ainsi apte à collecter des données concernant la place de stationnement (22).

12. Procédé selon l'une des revendications précédentes, dans lequel l'appareil portatif mobile (16) est mis en réseau avec un système d'assistance au véhicule du véhicule automobile (14), notamment dans lequel l'appareil portatif mobile (16) est apte à transmettre des signaux de commande au système d'assistance au véhicule.

13. Procédé selon l'une des revendications précédentes, dans lequel l'appareil portatif mobile (16) reçoit des données sur des places de stationnement potentielles en provenance d'une centrale de stationnement d'un parking ou d'un autre appareil portatif mobile différent, notamment dans lequel les données sont transmises à l'appareil portatif mobile (16) par un module informatique d'une centrale de stationnement ou de l'autre appareil portatif mobile différent.

14. Procédé selon l'une des revendications précédentes, dans lequel les métadonnées sont transmises par l'appareil portatif mobile (16) à un module informatique d'une centrale de stationnement.

15. Système d'aide au stationnement (17) d'un véhicule automobile (14) comprenant
- un module informatique (10) qui présente une première interface (S1) pour communiquer avec un appareil portatif mobile (16) et qui est conçu pour générer des données concernant une place de stationnement (22) pour le véhicule automobile (14), l'appareil portatif mobile (16) appelant les données du module informatique (10), et
- l'appareil portatif mobile (16), qui présente une deuxième interface (S2) pour communiquer avec le module informatique (10) et un réseau neuronal (12), l'appareil portatif mobile (16) étant conçu pour classer les données transmises concernant la place de stationnement (22) au moyen du réseau neuronal (12), la classification permettant de déterminer des informations sur la place de stationnement sous forme de métadonnées et de les mettre à la disposition d'un conducteur du véhicule automobile (14), l'appareil portatif mobile (16) transmettant au module informatique (10), après la classification, un résultat concernant la place de stationnement (22) .
